# EUROPEAN PATENT SPECIFICATION

(11) **EP 2 915 430 B1**
(45) Date of publication and mention of the grant of the patent: **08.08.2018**
(21) Application number: 13851857.6
(22) Date of filing: 29.10.2013
(51) Int. Cl.: A23L 27/00, A23L 27/21, A23L 27/50

(54) **METHOD FOR MANUFACTURING A POWDERY SEASONING**
VERFAHREN ZUR HERSTELLUNG EINES PULVERFÖRMIGEN GEWÜRZES
PROCEDE DE FABRICATION D'UN ASSAISONNEMENT EN POUDRE

(30) Priority: 30.10.2012 JP 2012239058
(43) Date of publication of application: 09.09.2015
(73) Proprietor: Kikkoman Corporation, Chiba 278-8601 (JP)
(72) Inventor: NAKAMURA, Satoru, Noda-Shi Chiba 278-8601 (JP); TAKAHAGI, Yasushi, Noda-Shi Chiba 278-8601 (JP)
(74) Representative: Kramer Barske Schmidtchen Patentanwälte PartG mbB
(86) International application number: PCT/JP2013/079301
(87) International publication number: WO 2014/069473

(56) References cited:
- WO-A1-2007/066437
- WO-A1-2008/068814
- WO-A1-2008/146491
- WO-A1-2011/055846
- WO-A1-2012/128221
- JP-A- H02 219 559
- JP-A- 2006 180 761
- JP-A- 2007 181 450
- JP-A- 2007 252 242
- JP-A- 2009 007 234
- JP-A- 2011 244 711
- US-A1- 2008 233 237
- US-A1- 2012 156 356

## Description

### Technical Field

The present invention relates to a production method of a powdery seasoning which has excellent powdering property and improved hygroscopic stability and which is less likely to cake during storage, powdery soy sauce in particular.

### Background Art

A powdery seasoning produced by drying and powdering a seasoning liquid obtained by enzymatically decomposing a protein-containing raw material generally has a problem in which the powdery seasoning is likely to cake during storage. In order to solve the problem, the following methods have been proposed: a method in which galactomannan or indigestible dextrin is added (PTL 1), a method in which a decomposition product of starch is added (PTL 2), a method in which dextrin and gelatin are added, followed by spray drying (PTL 3), a method in which enzymatically saccharified starch is added (PTL 4), a method in which cornstarch is added (PTL 5), a method in which powdery fat or oil is added (PTL 6), a method in which caked fat and a water-insoluble fine powder are added (PTL 7), a method in which a fatty acid ester is added (PTL 8) and the like. Furthermore, PTL 9 relates to a powdery seasoning and a method for producing the same. PTL 10 discloses a method of producing a solid seasoning using a liquid culture of kojie mold from a plant protein source, a solid seasoning produced from the same, a general food seasoning, sauce, dressing, soysauce, and processed food. PTL 11 relates to the preparation of thick soy sauce and a thick granular soy sauce.

### Citation List

### Patent Literature

PTL 1: JP-A-2008-61585
PTL2: JP-A-2003-38119
PTL 3: JP-A-8-252073
PTL 4: JP-A-56-58470
PTL 5: JP-A-7-184593
PTL 6: JP-A-2001-61417
PTL 7: JP-A-60-19458
PTL 8: JP-A-52-130932
PTL 9: US 2012/0156356 A1
PTL 10: US 2008/0233237 A1
PTL 11: JP H02-219559 A

### Summary of Invention

### Technical Problem

However, when the powdery seasoning is powdery soy sauce for instance, the content of an additive for stabilization against caking, such as those described in the background art, accounts for as high as 20 to 50% of the solid content derived from soy sauce. Thus, there is a problem in which the original taste components of soy sauce are relatively diluted and powdery soy sauce having the original rich taste of soy sauce is not obtained.

In addition, there is a problem in which while the addition of an additive for stabilization against caking, such as those described in the background art, is capable of preventing caking to a certain extent under an excellent storage condition such as a sealed state, the effect of preventing caking is not satisfactory in an atmosphere of general room temperature and humidity.

Accordingly, the invention aims to provide a production method of a powdery seasoning which has excellent powdering property and improved hygroscopic stability and which is less likely to cake during storage.

### Solution to Problem

The present inventors have found that the powdering property and the hygroscopic stability of a powdery seasoning can be improved and caking during storage can be prevented when the inorganic material concentration of the powdery seasoning is decreased to 50000 ppm or less and thus completed the invention.

That is, the invention is as follows.
1. A method for producing a powdery seasoning having an inorganic material concentration of 50000 ppm or less, which contains the following processes (1) to (3):
   (1) a process for obtaining a seasoning liquid by enzymatically decomposing a protein-containing raw material derived from at least one of wheat and a soybean in the presence of salt,
   (2) a process for obtaining a desalinated product by subjecting the seasoning liquid obtained in the process (1) to electrodialysis, and
   (3) a process for obtaining a powdery seasoning by drying and powdering the desalinated product obtained in the process (2).
2. The method for producing a powdery seasoning described in the above item 1, wherein the seasoning liquid is soy sauce.

### Advantageous Effects of Invention

The powdery seasoning obtained by the method of the invention has excellent powdering property and hygroscopic stability because the inorganic material concentration is 50000 ppm or less. This achieves an effect in which caking during storage is less likely to be caused.

In addition, because the powdery seasoning obtained by the method of the invention can have the above effect even without adding any additive, the original taste components of soy sauce are not diluted and the original rich taste of soy sauce can be obtained, for example when the powdery seasoning is powdery soy sauce.

### Brief Description of Drawings

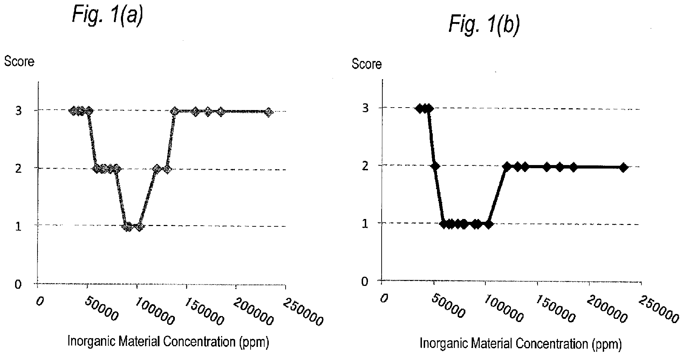

[Fig. 1] Fig. 1(a) is a graph showing the relation between the inorganic material concentration and the powdering property. Fig. 1(b) is a graph showing the relation between the inorganic material concentration and the hygroscopic stability.

### Description of Embodiments

The powdery seasoning is produced by drying and powdering a seasoning liquid obtained by enzymatically decomposing a protein-containing raw material derived from at least one of wheat and a soybean in the presence of salt and in which the inorganic material concentration is 50000 ppm or less. The method of the invention for producing a powdery seasoning contains the following processes (1) to (3).
(1) A process for obtaining a seasoning liquid by enzymatically decomposing a protein-containing raw material derived from at least one of wheat and a soybean in the presence of salt.
(2) A process for obtaining a desalinated product by subjecting the seasoning liquid obtained in the process (1) to electrodialysis.
(3) A process for obtaining a powdery seasoning by drying and powdering the desalinated product obtained in the process (2).

Each of the processes is explained below.

### (1) A process for obtaining a seasoning liquid by enzymatically decomposing a protein-containing raw material derived from at least one of wheat and a soybean in the presence of salt

The process (1) is a process for obtaining a seasoning liquid, which is to be dried and powdered, by decomposing a protein-containing raw material derived from at least one of wheat and a soybean in the presence of salt with an enzyme derived from a microorganism.

Wheat which has been subjected to a thermal denaturation treatment according to an ordinary method is used. The wheat is preferably hard wheat containing a large amount of a nitrogen component, and the thermal denaturation treatment is preferably a roasting treatment. Similarly, soybeans which have been subjected to a thermal denaturation treatment according to an ordinary method are used. Preferable soybeans are those obtained by boiling general soybeans or defatted soybeans by an ordinary method or subjecting the soybeans to a swelling treatment by a saturated steam treatment, a heating steam treatment and the like.

The protein-containing raw material may contain another component as long as it is derived from at least one of the wheat and the soybean. The other component is not particularly limited but is a vegetable protein such as a general kind of grain for example. Moreover, in the invention, such a vegetable protein which has been extracted by a known method or a purified protein which has been partially purified or purified if necessary can be also used. For example, a soybean protein obtained from soybeans, wheat gluten obtained from wheat and the like are mentioned.

The enzyme used for enzymatically decomposing the protein-containing raw material may be any enzyme as long as it is an enzyme capable of decomposing a protein and may be those containing such an enzyme. Examples are a commercially available protease, a microorganism which produces a protease [for instance, a liquid culture medium of a koji mold (liquid koji)], an enzyme-containing liquid from which the mold has been removed, an enzyme obtained by partially purifying the enzyme-containing liquid by an ordinary method, solid koji obtained by seeding a koji mold which produces a protease in a solid culture medium, an enzyme extracted from solid koji, an enzyme obtained by partially purifying the enzyme by an ordinary method and the like.

With respect to the enzymatic decomposition, the enzyme is added to the protein-containing raw material and the protein-containing raw material is decomposed in the presence of salt. When the seasoning liquid is soy sauce, the enzymatic decomposition is preferably carried out in an open system. The condition for the enzymatic decomposition may be a condition under which the decomposition of the protein-containing raw material progresses effectively and putrefaction or rancidity does not occur during the decomposition.

Specifically, the temperature for the enzymatic decomposition is preferably 10 to 55°C in general, more preferably 15 to 45°C. Moreover, the salt concentration for the enzymatic decomposition is preferably 1 to 17% by mass in general, more preferably 4 to 12% by mass. The period of the enzymatic decomposition is preferably one day to one year, more preferably two days to half a year.

Yeast or a lactic acid bacterium which is used for the production of general fermented foods may be added during the decomposition. Examples of the yeast are yeast species belonging to *Saccharomyces, Zygosaccharomyces, Torulopsis* and the like. Examples of the lactic acid bacterium are lactic acid bacteria belonging to *Tetragenococcus* or *Pediococcus.*

Examples of the seasoning liquid obtained in the process (1) are soy sauce and vegetable protein hydrolysate seasonings. Examples of the soy sauce are dark soy sauce, light soy sauce, tamari soy sauce, twice-brewed soy sauce, white soy sauce and the like. In addition, examples also include soy sauce and raw soy sauce during the production.

As it is well-known, soy sauce is produced by the following processes: mixing boiled soybeans and roasted and crushed wheat as protein-containing raw materials, preparing soy sauce koji by seeding and culturing a seed koji mold for soy sauce in the mixture, giving tastes by adding an adequate amount of a salt solution to the soy sauce koji, giving tastes of aging by fermenting and aging for a certain period, finally compressing, filtering, heating (sterilization) and clarifying.

### (2) A process for obtaining a desalinated product by subjecting the seasoning liquid obtained in the process (1) to electrodialysis

The process (2) is a process for obtaining a desalinated product by subjecting the seasoning liquid obtained in the process (1) to electrodialysis to remove salt. A known method can be used for the electrodialysis. For example, as disclosed in JP-B-47-46350, a desalinated product can be obtained by supplying liquid soy sauce into an electrodialysis tank in which an anion- and cation-exchange membrane is placed between a cathode and an anode, applying a direct voltage and thus moving the salt in the liquid soy sauce to the next room through the ion-exchange membrane.

In the invention, the inorganic material concentration of the powdery seasoning can be decreased to 50000 ppm or less by employing such a known electrodialysis method. Such a low inorganic material concentration cannot be achieved by ordinary processes for brewing soy sauce.

### (3) A process for obtaining a powdery seasoning by drying and powdering the desalinated product obtained in the process (2)

The process (3) is a process for obtaining a powdery seasoning having an inorganic material concentration of 50000 ppm or less by drying and powdering the desalinated product obtained in the process (2). Various known means can be employed as the means for drying and powdering the desalinated product, and a spray drying method, a drum drying method, a freeze drying method and the like can be used for example. The spray drying method is preferable among the methods.

Examples of the apparatus used for the spray drying method are a pressure nozzle spray dryer, a two-fluid nozzle spray dryer, a rotary disk (disk atomizer) spray dryer, a dryer for both spray drying and granulation and the like.

Specifically, for example, when the seasoning liquid is soy sauce, the condition is not different from an ordinary condition for drying and powdering soy sauce, and the powderization is preferably conducted under a condition with an inlet hot-air temperature of 120 to 200°C and an outlet temperature of 80 to 100°C.

The powdery seasoning obtained by the method of the invention as described above has excellent powdering property and improved hygroscopic stability and is less likely to cake during storage.

In the invention, the "inorganic material" is a substance which does not include carbon and specifically refers to Ca, K, Mg, Na, P, Zn, Mn, Cu and Fe. The inorganic material concentration is determined by analyzing the inorganic materials (Ca, K, Mg, Na, P, Zn, Mn, Cu and Fe) contained in the powdery seasoning by ICP emission spectroscopy and calculating the proportion of these elements relative to the mass of the powdery seasoning.

In the invention, the inorganic material concentration of the powdery seasoning is 50000 ppm or less, preferably 43000 ppm or less, and is preferably 30000 ppm or more.

When the inorganic material concentration of the powdery seasoning exceeds 50000 ppm, the powdering property and the hygroscopic stability deteriorate and caking is likely to be caused during storage. The inorganic material concentration of the powdery seasoning can be adjusted by employing a general operational condition, for example, operation under 15 V constant voltage, as the condition for the electrodialysis.

Specifically, as the powdery seasoning obtained by the method of the invention, powdery soy sauce obtained by drying and powdering soy sauce, powders of various vegetable protein hydrolysate seasonings and the like are mentioned, and the powdery seasoning is not particularly limited. The technique of the invention is especially effective for powdery soy sauce which has poor powdering property and hygroscopic stability, which is likely to cake during storage and which has a property that the original taste is not likely to be maintained due to the use of an additive.

In this regard, the hygroscopic stability of the powdery seasoning obtained by the method of the invention can be improved even without adding an additive. The additive here is a general additive which is used for preventing a powdery seasoning from caking, and examples thereof are saccharides such as dextrin, oxidized starch and soluble starch.

According to an embodiment without using the additive, especially in case of powdery soy sauce, the original taste components of soy sauce are not diluted by the additive, and thus powdery soy sauce having a rich taste can be obtained. Thus, the embodiment is preferable.

### Examples

The invention is further explained by Examples below, but the invention is not limited by the following examples.

### [Example 1]

Dark soy sauce was subjected to electrodialysis and powdered, and then the salt concentrations in terms of Na and the inorganic material concentrations were adjusted to the values shown in Table 1, thereby obtaining dark desalinated powdery soy sauce samples (experimental sections 1 to 4). In addition, powdery soy sauce obtained by directly spray drying the dark soy sauce without subjecting it to the electrodialysis was used as a control section 1.

In this regard, Microacilyzer S3 manufactured by ASTOM Corporation was used for the electrodialysis, and the inorganic material concentrations were adjusted by a constant voltage operation.

Mini spray dryer B-290 manufactured by Nihon BUCHI K.K. was used for the spray drying. The condition for the spray drying was an inlet temperature of 160°C, an outlet temperature of 90°C and a feed amount of 15 ml/minute.

With respect to the inorganic material concentration, 0.1 g of the powdery soy sauce and 4 ml of concentrated nitric acid were mixed and decomposed at 500 W for 10 minutes and at 1000 W for 10 minutes using a microwave sample decomposition apparatus, and then the volume was adjusted to 5 ml by adding purified water, thereby obtaining an original solution. Then, the original solution was diluted in such a way that the Na concentration fell within the range of 0.1 to 4 ppm, and the inorganic material concentration was measured by subjecting the diluted solution to ICP emission spectroscopy. Optima 3300XL manufactured by PerkinElmer Co., Ltd. was used as the analyzer, and Ca, K, Mg, Na, P, Zn, Mn, Cu and Fe contained in the powdery soy sauce were measured.

The salt concentration in terms of Na was calculated by multiplying the Na concentration measured by ICP emission spectroscopy by a coefficient of 2.54. The salt concentration in terms of Cl was measured by potentiometric titration method using DL 50 manufactured by Mettler-Toledo International Inc. The total nitrogen was measured by Kjeldahl method using Kjeltec auto sampler system 1035 manufactured by ACTAC Project Services Corporation. The water content of the powder was measured by reduced-pressure drying method using square vacuum low-temperature dryer DP32 manufactured by Yamato Scientific Co., Ltd.

The powdering property and the hygroscopic stability of each powdery soy sauce obtained were examined. The powering property was given a score of 3 when the grain size and the fluidity of the powdery soy sauce were equivalent to those of conventional powdery soy sauce, a score of 2 when thermal melting or caking was observed in a part of the powder, or a score of 1 when thermal melting or caking was observed in most of the powder and the sample did not have a powder form.

With respect to the hygroscopic stability, the powdery soy sauce was placed still in a sealed container with a humidity of 52% at 30°C, and a sample was taken after six hours and the powder state was observed. The hygroscopic stability was given a score of 3 when caking was not observed and the powder could be easily broken with a spatula, a score of 2 when partial caking was observed but the powder could be broken with a spatula, or a score of 1 when the sample hardened completely and the powder could not be broken with a spatula.

The results are shown in Table 1.

**[Table 1]**

| | Control Section 1 | Experimental Section 1 | Experimental Section 2 | Experimental Section 3 | Experimental Section 4 |
|---|---|---|---|---|---|
| Salt concentration in terms of Na (% by mass) | 41.2 | 30.6 | 19.9 | 13.5 | 7.8 |
| Salt concentration in terms of Cl (% by mass) | 43.6 | 29.1 | 16.3 | 8.5 | Trace |
| Inorganic material concentration (ppm) | 183636 | 136773 | 91663 | 66480 | 39922 |
| Total nitrogen (%) | 4.22 | 5.30 | 6.02 | 6.54 | 7.17 |
| Water content (%) | 2.0 | 2.0 | 2.1 | 2.0 | 2.2 |
| Powdering property (score) | 3 | 3 | 1 | 2 | 3 |
| Hygroscopic stability (score) | 2 | 2 | 1 | 1 | 3 |

As shown in Table 1, it was found that the powdering property and the hygroscopic stability deteriorated significantly in the experimental section 2, in which the inorganic material concentration was adjusted to 91663 ppm. On the other hand, it was observed that the powdering property improved in the experimental section 3, in which the inorganic material concentration was adjusted to 66480 ppm, as compared to the experimental section 2, and both of the powdering property and the hygroscopic stability improved greatly in the experimental section 4, in which the inorganic material concentration was adjusted to 39922 ppm, as compared to the experimental sections 2 and 3.

### [Example 2]

In order to obtain powdery soy sauce samples having the inorganic material concentrations shown in Table 2, a certain amount of an inorganic material (NaCl or KCl) was added to the desalinated product of the experimental section 4 in Example 1 (experimental sections 41 to 45 for NaCl and experimental sections 46 and 47 for KCl). The powdering property and the hygroscopic stability of each powdery soy sauce, which was obtained by spray drying as in Example 1, were examined. The results are shown in Table 2.

**[Table 2]**

| | NaCl Addition | | | | | KCl Addition | |
|---|---|---|---|---|---|---|---|
| | Experimental Section 41 | Experimental Section 42 | Experimental Section 43 | Experimental Section 44 | Experimental Section 45 | Experimental Section 46 | Experimental Section 47 |
| Salt Concentration in terms of Na (% by mass) | 42.0 | 28.7 | 20.7 | 13.7 | 10.6 | 5.0 | 7.2 |
| Salt Concentration in terms of Cl (% by mass) | 39.4 | 25.6 | 13.9 | 8.0 | 4.6 | 35.9 | 7.0 |
| Inorganic Material Concentration (ppm) | 170371 | 119310 | 88566 | 63650 | 50154 | 231579 | 78609 |
| Total Nitrogen (%) | 4.28 | 5.37 | 6.41 | 6.65 | 6.88 | 3.39 | 6.54 |
| Water Content (%) | 2.7 | 2.4 | 2.8 | 2.1 | 2.1 | 2.7 | 2.9 |
| Powdering Property (score) | 3 | 2 | 1 | 2 | 3 | 3 | 2 |
| Hygroscopic Stability (score) | 2 | 2 | 1 | 1 | 2 | 2 | 1 |

As shown in Table 2, in the experimental sections 41 to 45, in which the inorganic material concentrations were increased to a certain level by adding NaCl, it was not possible to achieve satisfactory powdering property and hygroscopic stability simultaneously, as in Example 1, when the inorganic material concentrations exceeded 50000 ppm.

In this regard, the results of the experimental sections 46 and 47, in which KCl was added instead of NaCl, show that the powdering property and the hygroscopic stability deteriorated by the addition of KCl. This suggests that the powdering property and the hygroscopic stability do not depend on Na alone but are largely affected by the total concentration of the inorganic materials.

Fig. 1(a) is a graph showing the relation between the inorganic material concentration and the powdering property, and Fig. 1(b) is a graph showing the relation between the inorganic material concentration and the hygroscopic stability. In this regard, data which are not shown in Table 1 and Table 2 are plotted as well in Figs. 1(a) and (b).

As shown in Fig. 1(a), it was found that the powdering property deteriorates as the inorganic material concentration decreases from 130000 ppm and the powdering property further deteriorates in the range of 89000 to 100000 ppm. However, the powdering property started improving in the experimental sections in which the inorganic material concentrations were adjusted to 78000 ppm or less, and the powdering property improved greatly in the experimental sections in which the inorganic material concentrations were adjusted to 50000 ppm or less.

In addition, as shown in Fig. 1(b), the hygroscopic stability deteriorated significantly in the inorganic material concentration range of 59000 to 100000 ppm, while the hygroscopic stability improved greatly in the experimental sections in which the inorganic material concentrations were adjusted to 50000 ppm or less.

From the above results, it was found that powdery soy sauce which has excellent powdering property and hygroscopic stability and which is less likely to cake during storage can be obtained by adjusting the inorganic material concentration to 50000 ppm or less.

While the present invention has been described in detail and with reference to specific embodiments thereof, it will be apparent to one skilled in the art that various changes and modifications can be made therein without departing from the scope thereof.

## Claims

1. A method for producing a powdery seasoning having an inorganic material concentration of 50000 ppm or less, which contains the following processes (1) to (3):
(1) a process for obtaining a seasoning liquid by enzymatically decomposing a protein-containing raw material derived from at least one of wheat and a soybean in the presence of salt,
(2) a process for obtaining a desalinated product by subjecting the seasoning liquid obtained in the process (1) to electrodialysis, and
(3) a process for obtaining a powdery seasoning by drying and powdering the desalinated product obtained in the process (2).

2. The method for producing a powdery seasoning according to claim 1, wherein the seasoning liquid is soy sauce.

## Patentansprüche

1. Verfahren zur Herstellung eines pulverförmigen Würzmittels mit einer Konzentration von anorganischem Material von 50000 ppm oder weniger, das die folgenden Vorgänge (1) bis (3) aufweist:
(1) einen Vorgang zum Erhalten einer Würzmittelflüssigkeit durch enzymatisches Abbauen eines Protein-enthaltenden Ausgangsmaterials, das von mindestens einem von Weizen und Sojabohne stammt, in der Gegenwart von Salz,
(2) einen Vorgang zum Erhalten eines entsalzten Produkts dadurch, dass die in dem Vorgang (1) erhaltene Würzmittelflüssigkeit einer Elektrodialyse unterzogen wird, und
(3) einen Vorgang zum Erhalten eines pulverförmigen Würzmittels durch Trocknen und Pulverisieren des entsalzten Produkts, das im Vorgang (2) erhalten worden ist.

2. Verfahren zur Herstellung eines pulverförmigen Würzmittels nach Anspruch 1, wobei die Würzmittelflüssigkeit Sojasauce ist.

## Revendications

1. Procédé de production d'un assaisonnement pulvérulent ayant une concentration en matière inorganique de 50 000 ppm ou moins, qui contient les processus (1) à (3) suivants :
(1) un processus d'obtention d'un liquide d'assaisonnement par décomposition enzymatique d'une matière première contenant des protéines dérivée d'au moins l'un parmi le froment et une fève de soja en présence de sel,
(2) un processus d'obtention d'un produit dessalé en soumettant le liquide d'assaisonnement obtenu lors du processus (1) à une électrodialyse, et
(3) un processus d'obtention d'un assaisonnement pulvérulent par séchage et réduction en poudre du produit dessalé obtenu lors du processus (2).

2. Procédé de production d'un assaisonnement pulvérulent selon la revendication 1, dans lequel le liquide d'assaisonnement est une sauce soja.
